Europäisches Patentamt

European Patent Office

Office européen des brevets

(11) Publication number: **0 327 085 B1**

# EUROPEAN PATENT SPECIFICATION

(45) Date of publication of patent specification: **29.09.93**  (51) Int. Cl.⁵: **D04C 1/06**, B29C 53/84

(21) Application number: **89101788.1**

(22) Date of filing: **02.02.89**

(54) **In-line consolidation of braided structures.**

(30) Priority: **02.02.88 US 151582**

(43) Date of publication of application:
    **09.08.89 Bulletin 89/32**

(45) Publication of the grant of the patent:
    **29.09.93 Bulletin 93/39**

(84) Designated Contracting States:
    **BE CH DE ES FR GB IT LI NL SE**

(56) References cited:
    **EP-A- 0 033 244        EP-A- 0 140 532**
    **DE-A- 1 086 880        FR-A- 2 118 243**
    **US-A- 3 592 884        US-A- 4 719 837**

(73) Proprietor: **E.I. DU PONT DE NEMOURS AND COMPANY**
    **1007 Market Street**
    **Wilmington Delaware 19898(US)**

(72) Inventor: **McConnell, Ronald Frank**
    **1110 Talleyrand Drive**
    **West Chester Pennsylvania 19382(US)**
    Inventor: **Popper, Peter**
    **3319 Morningside Road**
    **Wilmington Delaware 19810(US)**

(74) Representative: **Abitz, Walter, Dr.-Ing. et al**
    **Abitz, Morf, Gritschneder, Freiherr von Wittgenstein Postfach 86 01 09**
    **D-81628 München (DE)**

# Description

The invention relates to a method of building and consolidating a composite structure from fiber reinforced thermoplastic resin strands wherein said strands are converged under tension around a convergence point in a braiding pattern to form the braided composite structure and the braided structure is advanced through a heating zone whereafter it is cooled.

Fiber-reinforced plastic structures have been used for many years with increasing success because of their high strength, light weight and ease of fabrication compared to the wood or metal structures which they replace. Fibers such as glass, carbon, ceramic and aramid are popular as reinforcement, and thermoplastic resins are common polymeric matrices.

Braiding is one process for producing such structures and generally comprises forming an array of yarns extending substantially parallel to the axis of the structure and interlacing the yarns in a pattern through the array so they are interlaced with one another.

Polymeric materials reinforced with continuous filaments are used as precursors for highly-stressed parts such as aerospace components requiring the highest possible strength and stiffness with the lowest possible weight. When a composite preform is made with both reinforcing fibers and a matrix material, it must be consolidated in a subsequent step such as molding to form the final product. This consolidation process generally reduces the volume of the preform as air is removed and develops local crimp in the reinforcing fibers. Crimped fibers provide less reinforcement than straight ones and thereby reduce the strength and stiffness of the composite product.

US-A-3,592,884 discloses a method for building a composite propeller shaft wherein alternate layers of longitudinally extending and helically wound glass fibers are applied to the outer surface of an arbor. Following the application of the fiber glass layers, they are impregnated with an epoxy resin. The resin can also be applied to the fiber glass filaments before the wrapping step takes place. Following the wrapping and impregnating steps, the shaft assembly is passed through a heater in which the thermosetting resin is cured and hardened.

The invention as claimed in claim 1 solves the problem of how to enhance the stiffness and strength of the braided product.

The insitu consolidated braided composite structure (i.e. the ability to consolidate the structure during braiding without the need of consolidation processing after braiding) is constructed from a plurality of lengths of fiber reinforced thermoplastic resin strands braided on a mandrel. The strands are advanced toward the mandrel and converged under tension in a braiding pattern around a location on the mandrel to form a braided structure thereon. The braided structure is advanced through a heating zone as the braided structure is being formed where it is heated to a temperature that permits the thermoplastic resin to flow but below the degradation temperature of the resin as the structure advances through the heating zone. The braided structure is cooled as it leaves the zone. This in-line consolidation process provides a braided composite part with a very low percentage of local crimp present in the reinforcing fibers of the part thus enhancing the stiffness and strength of the product.

Using the procedures described herein local crimp for circular braided composite structures can be held to less than 3 percent or even less than 1 percent. A preferred embodiment of the invention is set forth in claim 2.

One way of carrying out the invention is described in more detail with reference to the drawings, in which:

Fig. 1 is a schematic view in perspective of circular braiding apparatus useful in practicing the invention and an associated consolidation unit.

Fig. 2 is a vertical cross-sectional view of Fig. 1.

Fig. 3 is a plan view of the adjustable heating chamber exit of the unit shown in Fig. 2.

Fig. 4 is an exploded view of the consolidation unit of Fig. 2.

Figs. 5 and 6 are graphs of the projected path and reference path of one braider yarn from the braided structure of Example II with in-line consolidation and in-line consolidation plus post consolidation, respectively.

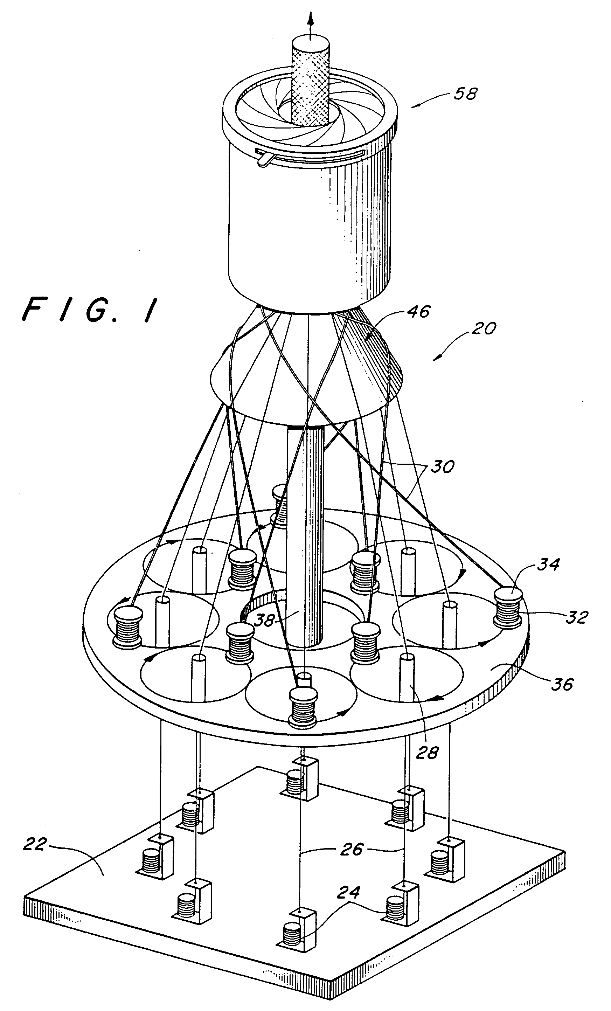

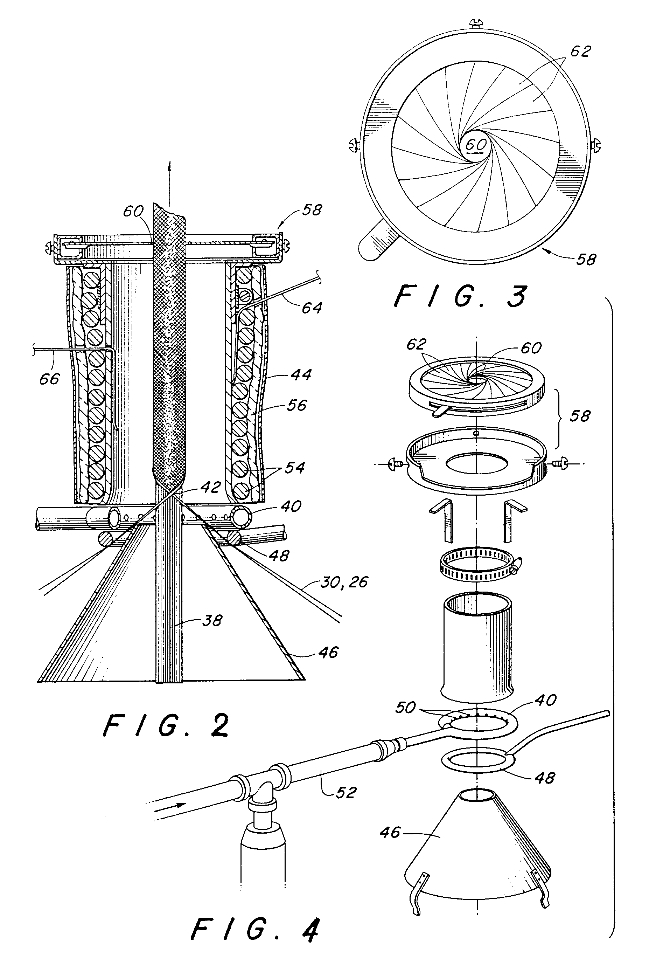

Referring to Fig. 1, a circular braiding machine (manufactured by Wardell Braiding Machine Co., Model No. W-38-53 equipped with #2 carriers) generally designated 20 is fed from a creel 22 supporting supply packages 24 of axial yarns 26 which are moved through guide tubes 28. Braiding yarns 30 are fed from supply packages 32 mounted on carriers 34 which are movable in face plate 36 (as indicated by arrows) by a horn gear mechanism (not shown). As shown in Figs. 2, 3 and 4, axial yarns 26 and braiding yarns 30 are braided over a shaped mandrel 38 as heat is supplied in the form of heated nitrogen through nitrogen injector ring 40 just before convergence point 42 which is surrounded by heating chamber 44. At the entrance to the heating chamber 44, the braiding yarn array is guided from below by a funnel guide 46 and from above by guide ring 48. The funnel guide 46 is also used to minimize hot gas leakage. The nitrogen injector ring 40 has exit holes 50 directing the flow of nitrogen gas which has been heated by nitrogen heater 52 towards the braiding array. The heating chamber 44 is made of a stainless steel cylinder wrapped with electrical heating coils 54 and fiberglass insulation 56. At the exit of heating chamber 44 is a mechanical device 58 with an adjustable orifice 60. The orifice size is adjusted by rotating the angular position of a number of leaf elements 62. The heating chamber wall temperature is measured by thermocouple 64 and temperature of the interior of the heating chamber is measured by thermocouple 66.

In operation, the dieless process described by Figs. 1, 2, 3, and 4, braiding yarns and axial yarns are impregnated with a thermoplastic matrix which matrix will soften and flow at a temperature which is below that which would cause the yarns to soften and flow. It is to be noted that the braiding yarns and the axial yarns may differ in composition. The temperature imposed by the hot gas and the heating chamber must be sufficient to cause the matrix to flow. The pressure which develops from the yarn tension and mandrel curvature must be adequate to fuse the yarns together.

## Method for Determining Local Crimp

Definitions:

Braid - An interlaced fabric composed of braiding yarns and in some cases axial yarns.

Axial Yarn - One of a number of yarns which pass lengthwise through the braid and do not interlace each other.

Braider - One of a number of yarns which interlace each other and pass through the braid in an irregular helix.

Braided Composite - A rigid structure made of a braid in which a large portion of the spaces between the yarns are filled with a matrix material.

The local-crimp can be defined as the fractional length difference between an actual yarn and a reference path. Usually this reference path is taken to be a straight line oriented in the yarn direction. In complex shaped braided structures which can be layered, the definition of a reference line must be generalized to include all possibilities. For example, for circular braids, a projected yarn path is measured for one circumference. This path could be quite circuitous in some cases even if the local crimp level is low. For this reason, the crimp is determined by comparing the length of the yarn project ion to a smoothed reference curve. This reference curve is computed by taking a moving average of the projected yarn path. A window width of 20% of the perimeter is used in this computation. The projection is taken on an irregular cylindrical surface which comes as close as possible to the structure. By this procedure, the local crimp of any shaped part can be determined. Note that since the lengths are measured along a projected length, they are not the same as along the actual yarn.

## Circular Braided Composites

1. Plot Graph of Projected Path of One Braider

a. Roll a transparent sheet around the composite. The sheet should remain in the form of an irregular cylinder or prism which comes as close as possible to the composite.

b. Mark the projected yarn path of one braider on the transparent sheet. The resulting graph shows the axial positoin "Y" vs. circumferential position "X" of the projected path. (Include 20% more than one circumference and identify the points which correspond to the start and end of one circumference or perimeter "P".) The prism or cylinder is then developed into a flat sheet where the path can be measured.

2. Plot a Smoothed Reference Path

a. Compute the reference path from the projected yarn path at each point by averaging "Y" over 20% of the circumference (from X-.1*P to X+.1*P).

3. Measure Path Lengths and Crimp

a. Measure the lengths of the projected yarn path and the reference path (designated Lp and Lr respectively).

b. Compute the crimp (C) from

$$(C = Lp/Lr - 1)$$

## Example I

A cylindrical tube structure is prepared by providing 16 groups of axial yarns and 32 braiding yarns of Kevlar® 49 fiber (manufactured by E. I. du Pont de Nemours and Company) melt impregnated with Kodar® PETG Copolyesters 673 (Eastman Chemical Products, Inc.) of total denier 4309 where the fiber volume fraction is 0.5. The yarns are braided over a circular shaped mandrel, formed from solid aluminum, with a 1.27 cm (0.5") diameter. The convergence half angle (angle between convergence cone and machine centerline) is 66°. The heating chamber length is 10 cm (4 inches) and its diameter is 5 cm (2 inches). The temperature of the nitrogen as supplied was 386°C and the wall temperature of the chamber was 430°C. The temperature within the chamber was 370°C. The maximum temperature between layers was determined to be 204°C. The axial velocity of the braided structure was maintained at 12,5 cm/min (5 in/min). The tension of both axial and braiding yarns was set to approximately 2.2 N (.5 lb). After braiding a layer, the yarns were cut and the resulting structure with the internal mandrel was overbraided using the same process. A total of 5 layers were formed.

Example II

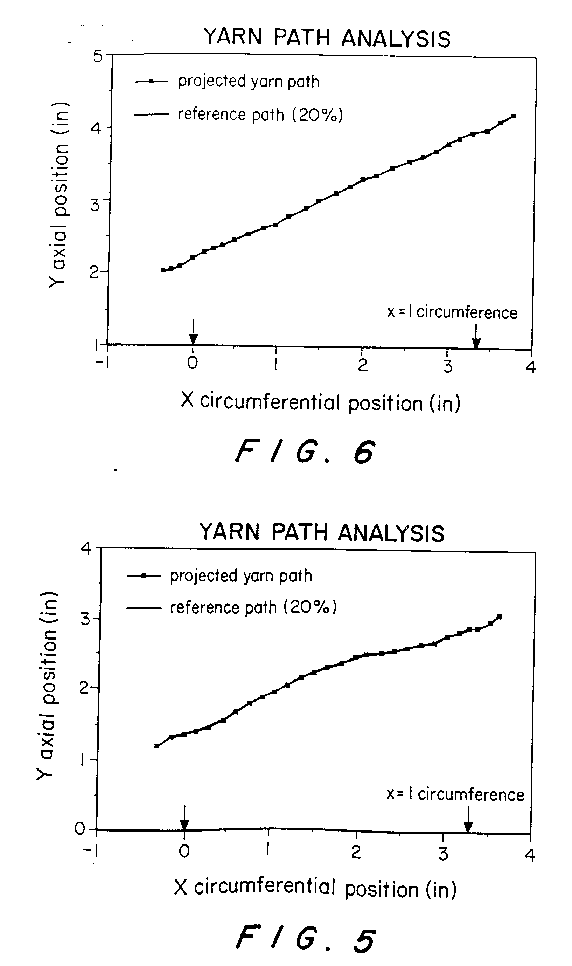

A rectangular hollow circular braided structure was prepared under the same conditions as Example I with the exceptions that a rectangular shaped mandrel formed from solid aluminum having the dimensions 1.65 cm by 1.849 cm (0.65" by 0.728") was used and that no axial yarns were provided. A total of 5 layers were formed. Local crimp was determined to be 0.6 percent using the yarn path analysis as shown in Fig. 5.

The above on-line consolidated structure was further post consolidated by heating at 220°C for 15 minutes with a pressure of 2.93 MPa (425 psi). Local crimp was determined to be 0.2 percent using the yarn path analysis as shown in Fig. 6.

## Claims

1. A method of building and consolidating a composite structure from fiber reinforced thermoplastic resin strands (30) comprising

converging said strands (30) under tension around a convergence point (42) in a braiding pattern to form a braided composite structure;

advancing said braided structure through a heating zone (44);

heating said braided structure to a temperature which will cause the thermoplastic resin to soften and flow as the structure advances through said zone (44), said temperature being below the degradation temperature of the resin;

and cooling said structure after it leaves the zone (44);

characterized

in that said convergence point (42) is sited on a mandrel (38) so that said braided structure is formed on said mandrel (38);

and in that said strands (30) are heated just before said convergence point (42) at the entrance of said heating zone (44).

2. The method of claim 1 wherein said structure is heated in an inert atmosphere.

## Patentansprüche

1. Verfahren zum Bilden und Verfestigen einer Verbundstruktur aus faserverstärkten Strängen (30) aus thermoplastischem Harz, wobei

die Stränge (30) unter Spannung um einen Konvergenzpunkt (42) in einem Verflechtungsmuster zusammengeführt werden, um eine geflochtene Verbundstruktur zu bilden;

die geflochtene Struktur durch eine Heizzone (44) geführt wird;

die geflochtene Struktur auf eine Temperatur erwärmt wird, die das thermoplastische Harz weich werden und fließen läßt, wenn die Struktur durch die Zone (44) geführt wird, wobei die Temperatur unterhalb der Abbautemperatur des Harzes liegt, und

die Struktur nach dem Verlassen der Zone (44) abgekühlt wird;

dadurch gekennzeichnet

daß der Konvergenzpunkt (42) auf einem Dorn (38) liegt, so daß die geflochtene Struktur auf dem Dorn (38) gebildet wird, und

daß die Stränge (30) unmittelbar vor dem Konvergenzpunkt (42) am Eingang der Heizzone (44) erwärmt werden.

2. Verfahren nach Anspruch 1, wobei die Struktur in einer Inertgasatmosphäre erwärmt wird.

## Revendications

1. Procédé pour former et consolider une structure composite formée par des torons (30) d'une résine thermoplastique renforcée par des fibres, consistant à

faire converger lesdits torons (30) sous tension autour d'un point de convergence (42) selon une configuration de tressage pour former une structure composite tressée;

faire avancer ladite structure tressée à travers une zone de chauffage (44) ;

chauffer ladite structure tressée à une température qui amène la résine thermoplastique à se ramollir et à s'écouler lorsque la structure avance dans ladite zone (44), ladite température étant inférieure à la température de dégradation de la résine ; et

refroidir ladite structure après qu'elle a quitté la zone (44) ;

caractérisé

en ce que ledit point de convergence (42) est situé sur un mandrin (38) de sorte que ladite structure tressée est formée sur ledit mandrin (38) ;

et en ce que lesdits torons (30) sont chauffés juste avant ledit point de convergence (42) à l'entrée de ladite zone de chauffage (44).

2. Procédé selon la revendication 1, selon lequel ladite structure est chauffée dans une atmosphère inerte.

F I G. I

F I G. 2

F I G. 3

F I G. 4

**YARN PATH ANALYSIS**

- ■ projected yarn path
- — reference path (20%)

x = l circumference

X circumferential position (in)

*F I G. 6*

**YARN PATH ANALYSIS**

- ■ projected yarn path
- — reference path (20%)

x = l circumference

X circumferential position (in)

*F I G. 5*